# FASCICULE DE BREVET EUROPEEN

(11) **EP 3 632 865 B1**
(45) Date de publication et mention de la délivrance du brevet: **03.09.2025**
(21) Numéro de dépôt: 19200261.6
(22) Date de dépôt: 27.09.2019
(51) Int. Cl.: C03C 17/32, C09D 4/06, C03C 17/00

(54) **PROCEDE DE DECORATION D'UN RECIPIENT EN VERRE ET RECIPIENT CORRESPONDANT**
DEKORATIONSVERFAHREN EINES GLASBEHÄLTERS, UND ENTSPRECHENDER BEHÄLTER
METHOD FOR DECORATING A GLASS CONTAINER AND CORRESPONDING CONTAINER

(30) Priorité: 01.10.2018 FR 1871113
(43) Date de publication de la demande: 08.04.2020
(73) Titulaire: Verescence France, 92800 Puteaux (FR)
(72) Inventeur: ROZIER, Médéric, 76260 ETALONDES (FR)
(74) Mandataire: Cabinet Didier Martin

(56) Documents cités:
- CN-A- 105 273 465
- US-A1- 2004 082 699

## Description

La présente invention se rapporte au domaine général de l'emballage, et plus précisément aux corps creux pourvus d'une surface en verre, du genre flacons ou pots, formant des récipients destinés à contenir une substance cosmétique, comme par exemple du parfum corporel liquide.

L'invention concerne plus précisément un procédé de décoration d'un récipient en verre destiné à contenir un produit cosmétique, par exemple un parfum, ledit procédé comprenant une étape d'application, sur une partie au moins dudit récipient, d'une couche d'une composition liquide ou pâteuse pour former un revêtement décoratif adhérant au récipient, ladite composition comprenant au moins une base liante, du genre résine, ainsi qu'une phase aqueuse ou solvant.

L'invention concerne également un récipient en verre destiné à contenir un produit cosmétique, par exemple un parfum, une partie au moins dudit récipient étant recouverte d'un revêtement décoratif.

L'utilisation de verre pour la réalisation de récipients à parfum liquide est particulièrement prisée, compte-tenu du caractère noble généralement prêté au verre par les consommateurs, et des qualités objectives de transparence, de robustesse, et de stabilité mécanique et chimique de ce matériau. C'est pourquoi, la totalité ou quasi-totalité des parfums corporels liquides, et en particulier des parfums considérés comme *« haut de gamme »* ou *« de luxe »* sont contenus dans des flacons en verre. Les qualités esthétiques d'un flacon à parfum s'avèrent d'ailleurs extrêmement importantes pour l'attractivité commerciale globale d'un parfum.

Dans cette optique, il s'avère donc essentiel de proposer un flacon de parfum dont l'esthétique est très nettement différente de celle des flacons de la concurrence, et présente un caractère particulièrement attractif et valorisant pour le parfum contenu dans le flacon.

Pour cela, il est connu de recourir à différentes techniques décoratives des flacons de verre, ces techniques reposant le plus souvent sur l'application d'un revêtement, généralement coloré, qu'il s'agisse d'un revêtement sensiblement uniforme appliqué sur toute la surface extérieure (ou parfois intérieure) du flacon, ou d'un revêtement se présentant sous la forme d'un motif imprimé, par exemple par sérigraphie, sur la paroi en verre du flacon.

Ces revêtements connus sont obtenus par la mise en œuvre de peintures (laques) et encres dont la formulation est spécifiquement adaptée pour répondre aussi efficacement que possible aux multiples contraintes et exigences propres au domaine du flaconnage verrier de luxe. Ces contraintes sont en particulier les suivantes :
- le revêtement doit présenter de façon durable une excellente tenue sur la surface en verre du flacon, afin que l'aspect esthétique du flacon soit préservé pendant de nombreux mois, sinon années, ce qui suppose d'éviter tout phénomène de délitement, déségrégation ou autre détérioration ;
- le dépôt du revêtement doit pouvoir être effectué dans des conditions économiques acceptables, avec les moyens industriels standards (dépôt par pulvérisation pneumatique ou par sérigraphie par exemple), ce qui est primordial dans un secteur économique « *grand public* » comme le secteur de la parfumerie.

Les formulations des peintures, laques et encres connues développées pour la décoration des flacons en verre répondent globalement de manière satisfaisante à ces exigences.

Elles n'en présentent pas moins certains inconvénients.

Un premier inconvénient réside dans le fait que ces compositions connues ne permettent d'obtenir que des effets de décoration relativement classiques, qui reposent avant tout sur un apport de couleur. Ces compositions connues, qu'il s'agisse de laques à pulvériser ou d'encres sérigraphiques, ne permettent en particulier pas toujours d'obtenir des effets esthétiques véritablement originaux, qui ne reposent pas essentiellement, sinon uniquement, sur un effet de coloration.

Un autre inconvénient des formulations de revêtement connues réside dans le fait que les compositions mises en œuvre incluent une part potentiellement très significative de substances potentiellement nuisibles sur le plan environnemental.

Le document CN105273465A décrit un revêtement de verre et son procédé de préparation.

Les objets assignés à l'invention visent en conséquence à porter remède aux différents inconvénients exposés dans ce qui précède et à proposer un nouveau procédé de décoration permettant d'obtenir un récipient en verre décoré qui, tout en étant particulièrement attractif du point de vue esthétique, peut être mis en œuvre avec des moyens industriels classiques, dans des conditions économiques acceptables, avec en outre un impact environnemental et sanitaire maîtrisé et limité.

Un autre objet de l'invention vise à proposer un nouveau procédé de décoration d'un récipient en verre qui est extrêmement simple, rapide et bon marché à mettre en œuvre.

Un autre objet de l'invention vise à proposer un nouveau procédé de décoration d'un récipient en verre qui permet d'obtenir des effets de texture particulièrement attractifs.

Un autre objet de l'invention vise à proposer un nouveau procédé de décoration d'un récipient en verre qui permet d'adapter de manière fine la matité d'un revêtement décoratif déposé sur le récipient.

Un autre objet de l'invention vise à proposer un nouveau procédé de décoration d'un récipient en verre qui permet d'obtenir de façon particulièrement fiable et efficace un aspect dépoli.

Un autre objet de l'invention vise à proposer un nouveau procédé de décoration d'un récipient en verre qui permet d'obtenir un revêtement au toucher soyeux.

Un autre objet de l'invention vise à proposer un nouveau procédé de décoration d'un récipient en verre permettant d'obtenir un décor particulièrement résistant, durable et fiable.

Un autre objet de l'invention vise à proposer un nouveau procédé de décoration d'un récipient en verre permettant d'obtenir des décors colorés selon une gamme de coloris possibles très étendue.

Un autre objet de l'invention vise à proposer un nouveau procédé de décoration d'un récipient en verre qui peut être adapté aisément et rapidement à différentes technologies de décoration, qu'il s'agisse par exemple de laquage par pulvérisation pneumatique ou d'impression sérigraphique.

Un autre objet de l'invention vise à proposer un nouveau procédé de décoration qui permet de valoriser des substances qui ne sont pas usuellement utilisées dans le domaine de la décoration des flacons pour parfums de luxe.

Un autre objet de l'invention vise à proposer un nouveau récipient en verre pourvu d'un revêtement décoratif qui, tout en étant résistant, stable et durable, présente un aspect particulièrement original et attractif, avec un impact environnemental limité et maîtrisé.

Un autre objet de l'invention vise à proposer un nouveau récipient en verre destiné à contenir un produit cosmétique qui met en œuvre un revêtement décoratif susceptible de présenter une grande diversité de coloris, de textures, et de degrés de matité.

Un autre objet de l'invention vise à proposer un nouveau récipient décoré qui est apte à être produit de façon industrielle à des conditions de coût optimisées.

Les objets assignés à l'invention sont atteints à l'aide d'un procédé de décoration d'un récipient en verre destiné à contenir un produit cosmétique, par exemple un parfum, ledit récipient étant un flacon ou un pot, ledit procédé comprenant une étape d'application, sur une partie au moins dudit récipient, d'une couche d'une composition liquide ou pâteuse pour former un revêtement décoratif adhérant au récipient, ladite composition comprenant au moins une base liante, du genre résine, ainsi qu'une phase aqueuse ou solvant, ledit procédé étant caractérisé en ce que ladite composition liquide ou pâteuse comprend également une dispersion de particules solides en quantité suffisante pour influer sur la texture et/ou la coloration dudit revêtement décoratif, lesdites particules solides étant formées de matière cellulosique, et en ce que lorsque lesdites particules solides incluent des particules de cellulose, la cellulose constituant lesdites particules présente un degré de polymérisation supérieur à 400, de préférence supérieur à 500, de façon encore plus préférentielle supérieur à 700, ladite composition étant exempte de tout halogène ou composé halogéné, et en particulier de toute substance à base de fluor ou dérivé de fluor.

Les objets assignés à l'invention sont également atteints à l'aide d'un récipient en verre destiné à contenir un produit cosmétique, par exemple un parfum, ledit récipient étant un flacon ou un pot, une partie au moins dudit récipient étant recouverte d'un revêtement décoratif obtenu par un procédé conforme à la revendication 1.

D'autres objets et avantages de l'invention apparaîtront mieux à la lecture de la description qui suit.

L'invention concerne en premier lieu un procédé de décoration d'un récipient en verre destiné à contenir un produit cosmétique, lequel se présente habituellement sous la forme d'une substance liquide ou pâteuse, voire pulvérulente. Le produit cosmétique en question peut être une crème, une lotion ou encore de façon préférentielle un parfum, et plus précisément un parfum corporel (mélange de substances aromatiques et d'une solution alcoolique). Le récipient en question est avantageusement destiné à être fermé à l'aide d'un organe de fermeture, constitué par exemple par un bouchon. Dans une variante préférentielle, le récipient est un flacon, destiné par exemple à recevoir un parfum corporel. Le récipient présente donc dans ce cas un col délimitant un orifice étroit destiné à être fermé par un bouchon ou un embout de pulvérisation.

L'invention n'est toutefois pas limitée à un flacon, et le récipient peut par exemple constituer un pot, Comme exposé précédemment, le récipient précité est en verre, et plus précisément en verre minéral. De préférence, le verre constituant le récipient est un verre de silice, avantageusement blanc et transparent, par exemple un verre sodo-calcique ou un verre borosilicate. Le récipient en verre est avantageusement fabriqué d'un seul tenant de manière classique, par un procédé mettant en œuvre des opérations de pressage et soufflage dans un moule. Le récipient est de préférence sensiblement intégralement en verre, et délimite une cavité d'accueil pour le produit cosmétique destiné à être stocké et conservé en son sein.

Conformément à l'invention, le procédé comprend une étape d'application, sur une partie au moins dudit récipient, d'une couche d'une composition liquide ou pâteuse pour former un revêtement décoratif adhérant au récipient. Avantageusement, ladite composition se présente, à température ambiante, sous la forme d'un liquide, ce qui permet de faciliter son application dans un cadre industriel, notamment par pulvérisation ou par impression sérigraphique. Le recours à une composition liquide est donc particulièrement préféré pour ces raisons, au contraire d'une composition poudreuse dont la mise en œuvre, notamment dans un atelier industriel de parachèvement, s'avère plus complexe et plus difficilement industrialisable. La partie du récipient sur lequel est appliquée ladite couche peut correspondre à tout ou partie de la surface externe du récipient, directement accessible et visible depuis l'extérieur, et/ou tout ou partie de la surface interne du récipient, située en regard de la cavité d'accueil du produit cosmétique.

De préférence, la couche de composition liquide ou pâteuse, destinée à former un revêtement décoratif adhérant au récipient, est appliquée sur sensiblement la totalité de la surface extérieure du récipient, afin de former un revêtement décoratif externe. Il est cependant parfaitement envisageable, sans pour autant que l'on sorte du cadre de l'invention, que seule une partie de la surface externe du récipient soit recouverte, ou encore alternativement que la composition soit appliquée uniquement sur la face interne du récipient, afin de recouvrir cette dernière partiellement ou totalement. Dans le cadre du procédé selon l'invention, la couche de composition liquide ou pâteuse peut être appliquée de manière uniforme et continue, pour former un revêtement sensiblement uniforme, ou selon un motif avec des zones revêtues et des zones non revêtues. Avantageusement, la partie du récipient sur laquelle est appliquée la couche de composition liquide ou pâteuse est une paroi de verre nu, c'est-à-dire que la composition est appliquée directement sur le verre, sans couche intermédiaire. Il est cependant envisageable, sans pour autant que l'on sorte du cadre de l'invention, qu'une première couche (par exemple une couche de primaire d'adhérence, ou une couche décorative, ou tout autre traitement de surface) soit appliquée sur le verre nu et que la couche de la composition liquide ou pâteuse soit appliquée sur cette première couche.

Ladite composition liquide ou pâteuse destinée à être appliquée sur le récipient comprend au moins une base liante, du genre résine, ainsi qu'une phase aqueuse ou une phase solvant. La base liante est destinée à former, sur la surface du verre constituant le récipient, un film adhérant après séchage de la couche. La base liante est le composant principal de la composition liquide ou pâteuse et elle assure classiquement le lien entre tous les composants de la composition, et l'adhérence de la couche au récipient.

La base liante est avantageusement composée de macromolécules d'origine naturelle ou synthétique, la base liante pouvant inclure un ou plusieurs liants, dont certains peuvent jouer le rôle de durcisseur en conduisant par exemple à une réticulation lors du séchage.

Comme indiqué auparavant, la composition comprend, outre la base liante, une phase aqueuse ou une phase solvant (le terme *« solvant* » désigne ici un solvant organique) pour la mise en solution ou en dispersion du ou des liants constituant la base liante. La phase aqueuse contient un mélange d'eau et de solvant(s), par exemple entre 60 et 80% d'eau en poids, tandis que si une phase solvant est alternativement mise en œuvre, elle ne contient pas d'eau mais uniquement des solvants (organiques).

L'invention n'est pas limitée à une base liante ou à une phase aqueuse ou phase solvant spécifiques, et toute base liante et phase aqueuse ou solvant adaptée à une application sur du verre pourra être utilisée, en tenant compte du mode d'application retenue (pulvérisation d'une peinture ou laque, ou impression, par exemple sérigraphique, d'une encre).

Dans le cas d'une composition en phase aqueuse, la composition peut être hydrodiluable (cas où la base liante est en émulsion ou en dispersion colloïdale dans la phase aqueuse) ou hydrosoluble (base liante en solution dans la phase aqueuse).

De préférence, le mélange de la base liante et de la phase aqueuse ou solvant forme une préparation fluide, de type vernis, de préférence incolore et avantageusement transparent, capable d'être étalée en couche mince sur la zone du récipient en verre à revêtir.

Selon l'invention, la composition liquide ou pâteuse susvisée comprend également une dispersion de particules solides en quantité suffisante pour influer sur la texture et/ou la coloration dudit revêtement décoratif, lesdites particules étant formées de matière cellulosique, éventuellement végétale. Le terme *« particules* » vise ici de manière générale des très petits éléments ou fragments, quelles que soient leur géométrie et leur nature, pour autant qu'il s'agisse bien de particules solides. Lesdites particules se présentent par exemple sous la forme de fibres et/ou de granules et/ou de poudre, étant entendu que le recours à des fibres est préféré pour des raisons d'applicabilité (notamment par pulvérisation ou par sérigraphie) et de qualité du résultat décoratif obtenu, tant en termes d'aspect visuel que de texture et de toucher.

Les particules solides en question sont donc dispersées dans le mélange incluant la base liante et la phase aqueuse ou la phase solvant, cette dispersion étant avantageusement sensiblement homogène. Ladite dispersion de particules solides est avantageusement distincte du liant, c'est-à-dire qu'elle ne joue préférentiellement aucun rôle de liant, les particules solides étant simplement distribuées, de préférence de façon uniforme et homogène, dans la base liante, de sorte que de préférence la composition forme ainsi une suspension colloïdale liquide. Ces particules solides, insolubles dans la phase aqueuse ou solvant ou dans la base liante, sont en quantité suffisante pour avoir une influence sur la texture de la composition, et lui impartir en particulier un certain relief ou rugosité. Alternativement ou de préférence de manière complémentaire, les particules solides en question influent également sur la coloration de la composition, et donc du revêtement décoratif obtenu à partir de la couche de cette dernière déposée sur le récipient. De préférence, les particules solides produisent un double effet de texturation et de coloration du revêtement décoratif, lequel est par exemple coloré et opaque.

Comme indiqué précédemment, les particules solides en question sont formées soit de matière cellulosique, soit à la fois de matière végétale et de matière cellulosique. En d'autres termes, l'invention concerne ici l'incorporation de particules solides de matière cellulosique, dans un vernis, de préférence incolore et transparent ou translucide, lequel vernis est formé par le mélange d'au moins une base liante et d'une phase aqueuse ou d'une phase solvant. La mise en œuvre de telles particules solides de nature cellulosique, s'avère compatible avec l'application et la tenue du revêtement sur le verre, et est susceptible de procurer des effets esthétiques remarquables, en permettant notamment d'obtenir un revêtement particulièrement mat, texturé, présentant des toucher et coloration inédits.

Un autre intérêt majeur de recourir à des particules solides de matière cellulosique, réside dans le fait que de telles particules peuvent être formées de produits biosourcés, obtenus à partir de matières premières renouvelables issues de la biomasse, d'agro-ressources et/ou issus en tout ou partie de matières recyclées (par exemple contenant des journaux, papiers de collecte, ou résidus de bois coupés). L'incorporation de particules solides formées de matière cellulosique, permet ainsi non seulement d'obtenir des effets esthétiques attractifs sans nuire à la tenue et à l'applicabilité de la composition, mais également de réduire l'impact environnemental du procédé de décoration.

Avantageusement, le récipient présente une surface interne destinée à se trouver en contact avec le produit cosmétique, et une surface externe opposée, tournée vers l'extérieur et donc hors de contact du produit cosmétique. Avantageusement, ladite partie du récipient sur laquelle est appliquée ladite couche est uniquement formée par la surface externe, et non par la surface interne, afin de former un revêtement décoratif externe hors de contact du produit cosmétique. Ceci permet d'éviter toute interaction entre le produit cosmétique contenu dans le récipient et le revêtement décoratif, interaction qui pourrait en particulier, notamment lorsque le produit cosmétique est un parfum (avec donc une teneur en alcool élevée), causer un relargage des particules solides formées de matière cellulosique, éventuellement végétale, dans le produit cosmétique (par exemple le parfum) engendrant ainsi une potentielle dégradation du produit cosmétique susceptible d'en amoindrir la qualité.

Les particules solides incluent par exemple des particules de cellulose, insolubles dans l'eau, de préférence des particules constituées sensiblement intégralement de cellulose, et plus précisément de fibres de cellulose d'origine naturelle, obtenues par des voies ne mettant pas en œuvre de transformations chimiques significatives (incluant par exemple des opérations de dépolymérisation, impliquant par exemple une hydrolyse acide), mais par exemple uniquement des opérations de traitement mécanique, thermique, et éventuellement de blanchissage. Ceci exclut le recours à des matériaux de synthèse du genre nitrocellulose, esters de cellulose, éthers cellulosiques ou cellulose microcristalline par exemple. La cellulose constituant lesdites particules de cellulose présente un degré de polymérisation supérieur à 400, de préférence supérieur à 500, de façon encore plus préférentielle supérieur à 700. Il s'avère en particulier que la cellulose microcristalline conduit, en raison de son aptitude à gélifier, à un comportement proche de, voire similaire à, celui d'un gel, qui n'est pas toujours optimal pour une application dans un cadre industriel sur des récipients en verre (flacons pour parfums notamment), notamment par pulvérisation ou sérigraphie. La mise en œuvre de cellulose microcristalline ne permet pas non plus d'obtenir forcément des effets de textures remarquables. Dès lors, ladite composition liquide ou pâteuse est avantageusement exempte de cellulose microcristalline.

De préférence, la dispersion de particules solides est uniquement formée de fibres naturelles constituées intégralement de cellulose, et plus précisément de cellulose d'origine naturelle, blanchie ou non, et par exemple de cellulose en poudre. Il est cependant envisageable de mettre en œuvre de manière complémentaire de l'hémicellulose et/ou de la lignine.

Un exemple de composition générale renfermant des particules de cellulose, en vue d'une application par sérigraphie sur du verre, est avantageusement le suivant :
- 3 parts en poids de poudre de cellulose (granulométrie inférieure à 40 µm de préférence) sont mélangées à 7 parts en poids d'encre de sérigraphie (par exemple époxy ou acrylique), pour former une composition primaire ;
- un durcisseur (par exemple à base époxy) est ajouté à la composition primaire, en une quantité représentant par exemple 10 à 30 % en poids de la composition primaire ;
- un diluant (qui peut être un diluant pour encre époxy tel que du 2-butoxyéthanol, ou un diluant à base acrylique pour encre acrylique) est ajouté au mélange précité, en une quantité correspondant à 0 à 20 % en poids de la composition primaire.

Une telle composition se prête particulièrement bien à un dépôt par sérigraphie et permet d'obtenir un revêtement décoratif mat qui répond à toutes les exigences de tenue, de stabilité et de durabilité concernant les décors externes de récipients en verre pour produits cosmétiques (notamment les flacons de parfum). Lorsque la composition est destinée à être déposée par sérigraphie pour former un décor mettant en œuvre des lettrages de petite taille, on aura plutôt recours à un mélange mettant en œuvre au plus 2 parts en poids de particules de cellulose pour 8 parts en poids d'encre de sérigraphie (en lieu et place des 3 et 7 parts susvisées), c'est-à-dire au plus 20% en poids de poudre de cellulose.

Un exemple particulier d'une composition incluant de la poudre de cellulose et destinée à être appliquée par sérigraphie pour former un revêtement décoratif adhérant à un récipient en verre, sur la surface externe de ce dernier, peut par exemple être obtenu de la façon suivante :
- on met une quantité prédéterminée (par exemple 7 g) d'encre de sérigraphie dans un récipient, puis on ajoute de la poudre de cellulose Technocel ^{®} 40 produite par la société CFF GmbH & Co.KG (Arnstädter Str. 2, 98694 Ilmenau, Allemagne), à hauteur par exemple de 3 g et on mélange le tout.
- un diluant est ensuite ajouté (par exemple à hauteur de 0,7 g) pour obtenir la viscosité souhaitée.
- un durcisseur est enfin ajouté (par exemple à hauteur de 2,8 g) et l'ensemble de la composition ainsi obtenue est mélangée pour obtenir une composition homogène qui est adaptée à être déposée par une technique sérigraphique sur la surface externe d'un récipient en verre.

La composition ainsi obtenue présente ainsi les teneurs suivantes en poids :
- durcisseur : 20,7 % ;
- diluant : 5,2 % ;
- charges végétales (cellulose Technocel ^{®} 40 ) : 22,2 % ;
- encre mise à la teinte : 51,9 %.

Cette composition permet d'obtenir un revêtement décoratif qui répond de manière satisfaisante à l'ensemble des exigences de tenue, de stabilité et de résistance requises pour les décors externes de récipients en verre pour produits cosmétiques (notamment les flacons de parfum).

Un exemple de composition générale à base de particules de cellulose se prêtant particulièrement bien à un dépôt par laquage (c'est-à-dire pulvérisation au moyen par exemple d'un pistolet pneumatique) est le suivant :
- vernis, par exemple de type copolymère acrylique,
- poudre de cellulose (par exemple Technocel ^{®} 40), en une quantité représentant au maximum 15 % en poids du vernis ;
- diluant, constitué par exemple d'eau, en une quantité représentant 10 à 40 % en poids du vernis ;
- au besoin un colorant qui représente une quantité égale au maximum à 20 % en poids du vernis ;
- au besoin une teinte à base pigmentaire, représentant au maximum 40 % en poids du vernis ;
- un promoteur d'adhérence, en une quantité représentant par exemple 3 % en poids du cumul vernis + poudre de cellulose + colorant + pigments, le promoteur d'adhérence étant avantageusement à base silane (par exemple du glycidoxypropyltriméthoxysilane).

Cette composition se prête particulièrement bien à un dépôt par laquage et permet d'obtenir un revêtement décoratif mat et rugueux qui répond à toutes les exigences de tenue, stabilité et résistance requises pour les décors externes de flacons de parfum ou pots de crème en verre.

De manière générale, lors de l'application de la composition pour former le revêtement décoratif, il est important d'agiter en permanence le bac de préparation pour éviter toute inhomogénéité. Il importe également de rester en deçà de 15 % en poids de particules de cellulose, et d'utiliser également une granulométrie de particules de cellulose inférieure à 40 µm, afin d'éviter tout bouchage ou encrassement intempestif de l'installation de laquage, et notamment des buses de pulvérisation permettant de pulvériser la composition sous forme de spray.

Un exemple particulier de composition à base de poudre de cellulose destinée à une application par laquage peut être obtenu de la façon suivante :
- introduire de l'eau déminéralisée (par exemple 300 g) dans un récipient puis un pigment blanc (par exemple 240 g) et mélanger le tout ;
- introduire dans le récipient un vernis mat, à hauteur de 1500 g et mélanger;
- introduire un pigment bleu à hauteur de 2 g et mélanger ;
- introduire un pigment noir à hauteur de 0,3 g et mélanger ;
- introduire un pigment violet, à hauteur de 1,2 g et mélanger ;
- introduire 150 g de poudre de cellulose Technocel ^{®} 40 et mélanger ;
- introduire un promoteur d'adhérence (57 g) et mélanger ;
- mesurer la viscosité et ajouter au besoin de l'eau pour l'ajuster.

Ceci permet d'obtenir une composition avec les teneurs suivantes en poids :
- vernis mat (66,65 %) ;
- promoteur d'adhérence (2,53 %) ;
- charges végétales (cellulose Technocel ^{®} 40) :6,67 % ;
- pigment blanc (10,66 %) ;
- pigment bleu (0,09 %) ;
- pigment noir (0,01 %) ;
- pigment violet (0,05 %) ;
- eau en tant que diluant (13,33 %).

Cette composition permet d'obtenir, une fois déposée par pulvérisation (spray) sur la surface externe d'un récipient en verre, un revêtement décoratif de couleur bleu ciel rugueux et opaque présentant un aspect esthétique tout à fait remarquable.

Les particules solides peuvent par exemple être formées de particules (de préférence des fibres) d'hémicellulose, ou d'un mélange de particules (de préférence des fibres) de cellulose et de particules (de préférence des fibres) d'hémicellulose, ou de particules (de préférence des fibres) incluant chacune de la cellulose et de l'hémicellulose, ainsi qu'éventuellement de la lignine. L'invention peut donc mettre en œuvre des particules solides incluant des particules de cellulose et éventuellement des particules d'hémicellulose et/ou de lignine.

Alternativement, ou de manière complémentaire, lesdites particules solides incluent des particules de bois qui peuvent provenir par exemple de résidus de bois coupé ou d'une filière de recyclage. Les particules de bois en question peuvent être utilisées en lieu et place des particules de cellulose, ou venir en complément des particules de cellulose, de sorte que la dispersion de particules solides est formée par exemple d'un mélange de particules de cellulose et de particules de bois. De préférence, les particules de bois incluent non seulement de la cellulose (par exemple hauteur de 50 %) mais également de l'hémicellulose (par exemple à hauteur de 25% en poids) ainsi que de la lignine (par exemple à hauteur de 25 % en poids). De préférence, lesdites particules solides incluent des fibres de bois.

Un exemple de composition générale mettant en œuvre des fibres de bois pour une application par sérigraphie est la suivante :
- on mélange 2 parts en poids de fibres de bois pour 8 parts en poids d'encre de sérigraphie (par exemple époxy ou acrylique) pour obtenir une composition primaire ; les particules de fibres de bois présentent avantageusement une granulométrie inférieure à 40 µm.
- un durcisseur, par exemple à base époxy, est ajouté à la composition primaire, en une quantité représentant par exemple 10 à 30 % en poids de la composition primaire;
- un diluant (par exemple un diluant pour encre époxy du genre 2 - butoxyethanol ou un diluant pour encre acrylique, à base acrylique) est ajouté en une quantité représentant entre 0 et 20 % en poids de la composition primaire.

Une telle composition permet d'obtenir un revêtement mat mais ne permet pas de réaliser de petits lettrages compte tenu du caractère relativement grossier des fibres de bois concernées, issues de rebuts de gestion forestière.

Un exemple particulier de composition spécifiquement adaptée pour être appliquée en sérigraphie sur un récipient en verre, par exemple sur la surface externe d'un flacon ou pot en verre, est le suivant :
- une encre de sérigraphie (14 g), par exemple une encre de sérigraphie UV est versée dans un récipient ;
- est ajouté ensuite dans le récipient contenant l'encre de sérigraphie 6 g de poudre de fibres de bois Technocel ^{®} HM40K, fabriqué par la société CFF GmbH & Co.KG (Arnstädter Str. 2, 98694 Ilmenau, Allemagne) ;
- les substances sont mélangées, puis un diluant (3 g) est ajouté pour obtenir la viscosité souhaitée ;
- le tout est à nouveau mélangé, puis un durcisseur est ajouté (à hauteur de 0,7 g) et mélangé avec le reste des composants.

Ceci permet d'obtenir une composition avec les teneurs en poids suivantes :
- durcisseur : 3 % ;
- diluant : 12,7 % ;
- fibres de fibres de bois Technocel ^{®} HM40K : 25,3 % ;
- encre de sérigraphie UV : 59,1 %.

Il est par ailleurs envisageable de mettre en œuvre, en complément des différentes natures de particules précitées (cellulose, hémicellulose, lignine, bois), des particules de plantes ligneuses. Par exemple, lesdites particules solides incluent :
- des particules à base de lin, par exemple des particules d'anas et/ou des particules de fibres de lin,
- et/ou des particules de chanvre,
- et/ou des particules (de préférence des fibres) de bambou.

Dès lors, lesdites particules solides incluent avantageusement :
- des particules à base de lin, par exemple des particules d'anas et/ou des particules de fibres de lin,
- et/ou des fibres de bois,
- et/ou de la cellulose en poudre,
- et/ou des particules de chanvre,
- et/ou des particules de bambou.

Les particules à base de lin donnent un résultat esthétique intéressant, avec l'obtention d'un revêtement mat. En particulier, le recours à des particules d'anas de lin (rebuts du teillage formés par des fragments de paille de lin) permet d'obtenir un excellent compromis qualité / prix et de formuler des compositions soit destinées à une application par pulvérisation (au pistolet pneumatique par exemple), soit destinées à une application par sérigraphie. Une composition générale mettant en œuvre des particules de lin, en vue d'une application par sérigraphie, peut être avantageusement formée ainsi :
- on mélange des particules de lin (anas ou fibres), présentant une granulométrie avantageusement inférieure ou égale à 40 µm, avec une encre de sérigraphie, dans une proportion de 3 parts en poids de particules de lin pour 7 parts en poids d'encre de sérigraphie, laquelle encre de sérigraphie est une encre époxy ou une encre acrylique par exemple, ce qui permet d'obtenir une composition primaire ;
- on ajoute à cette composition primaire un durcisseur, qui est préférentiellement à base époxy et un diluant, lequel peut par exemple être un diluant pour encre époxy, tel que le 2-butoxyéthanol, ou un diluant à base acrylique, lorsque l'encre de sérigraphie est une encre acrylique ; de préférence, la quantité de durcisseur ajoutée à la composition primaire représente entre 10 et 30 % en poids de ladite composition primaire, tandis que la quantité de diluant ajoutée à la composition primaire représente entre 0 et 20 % en poids de ladite composition primaire.

La composition ainsi obtenue se prête bien à une application par sérigraphie sur du verre et permet d'obtenir un revêtement mat conforme aux exigences de tenue, de stabilité et de résistance requises pour les revêtements extérieurs de récipients en verre pour produits cosmétiques (flacons de parfum en verre par exemple). Lorsque la composition est destinée à être déposée par sérigraphie pour former un décor mettant en œuvre des lettrages de petite taille, on aura plutôt recours à un mélange mettant en œuvre au plus 2 parts en poids de particules de lin pour 8 parts en poids d'encre de sérigraphie (en lieu et place des 3 et 7 parts susvisées), c'est-à-dire au plus 20% en poids de particules de lin.

Bien entendu, d'autres substances pourront être incluses dans la composition, comme par exemple un correcteur de tension, qui peut être ajouté pour favoriser un étalement approprié de l'encre favorisant l'application par sérigraphie.

Un exemple particulier de composition mettant en œuvre des particules de lin, particulièrement adaptée à une application par sérigraphie, consiste à verser une quantité (par exemple 7 g) d'encre de sérigraphie mise à la teinte dans un récipient, puis à ajouter des particules de lin (sous forme d'anas) à hauteur de 3 g. On mélange ensuite, puis on ajoute un correcteur de tension (0,2 g). On mélange alors à nouveau, et on ajoute un diluant (1,5 g) pour obtenir la viscosité souhaitée. On ajoute ensuite un durcisseur (2,1 g) et on mélange, ce qui conduit à l'obtention d'une composition qui se prête particulièrement bien à une application par impression sérigraphique.

La composition en question présente les teneurs en poids suivantes :
- durcisseur : 15,2 % ;
- diluant : 10,9 % ;
- correcteur : 1,4 %
- charges végétales (anas) : 21,7 % ;
- encre mise à la teinte : 50,7 %.

Un exemple de composition générale mettant en œuvre des particules de lin, en vue d'une application par laquage (pulvérisation d'un spray, par exemple au moyen d'un pistolet pneumatique) met quant à lui avantageusement en œuvre :
- un vernis, par exemple un copolymère acrylique,
- des particules de lin (anas ou fibres), de granulométrie préférentiellement inférieure à 40 µm, en une quantité représentant au maximum 15 % en poids du vernis ;
- au besoin une teinte colorante, de préférence en une quantité représentant au maximum 20 % en poids de la quantité de vernis ;
- au besoin une teinte à base pigmentaire, de préférence en une quantité représentant au maximum 40 % en poids de la quantité de vernis ;
- un promoteur d'adhérence, par exemple à base silane (tel que du glycidoxypropyltrimethoxysilane), de préférence en une quantité représentant par exemple environ 3 % en poids de la quantité cumulée de vernis, de lin et de teinte (colorant et/ou pigments) ;
- un diluant, qui est avantageusement de l'eau, et dont la quantité est adaptée pour régler la viscosité de la composition afin de la rendre appropriée à une application par pulvérisation pneumatique (laquage), ladite quantité représentant par exemple entre 10 et 40 % en poids de la quantité de vernis.

Une telle composition permet ainsi d'obtenir par laquage un revêtement décoratif mat et rugueux. De manière générale, lors de l'application de la composition pour former le revêtement décoratif, il est important d'agiter en permanence le bac de préparation pour éviter toute inhomogénéité. Il importe également de rester en deçà de 15 % en poids de particules de lin (anas ou fibres), et d'utiliser également une granulométrie de particules de lin inférieure à 40 µm, afin d'éviter tout bouchage ou encrassement intempestif de l'installation de laquage, et notamment des buses de pulvérisation permettant de pulvériser la composition sous forme de spray.

Un exemple particulier de composition particulièrement adaptée au laquage consiste à mettre de l'eau déminéralisée dans un récipient, puis à introduire dans le récipient un vernis mat (par exemple à hauteur de 10 g) et à mélanger. Ensuite est introduit un vernis brillant dans le récipient (par exemple à hauteur de 10 g), le vernis brillant étant mélangé avec le reste (eau déminéralisée et vernis mat). Ensuite, 4 g de particules de lin, sous forme d'anas, sont ajoutés dans le récipient et mélangés avec son contenu. Un promoteur d'adhérence (par exemple à hauteur de 0,6 g) est ensuite introduit et mélangé. La viscosité est alors mesurée, et de l'eau est éventuellement ajoutée en tant que diluant pour ajuster la viscosité.

Ceci permet d'obtenir une composition incluant :
- un vernis mat à hauteur de 32,68 % en poids ;
- un vernis brillant à hauteur de 32,68 % en poids ;
- un promoteur d'adhérence à hauteur de 1,96 % en poids ;
- des particules de lin (anas) à hauteur de 13,07 % en poids ;
- de l'eau à hauteur de 19,61 % en poids.

Le dépôt de cette composition par laquage conduit à l'obtention d'un revêtement décoratif externe qui répond à toutes les exigences de résistance et tenue mécanique pour les récipients de produits cosmétiques (flacons de parfum ou pots de crème par exemple) en verre.

Enfin, une autre possibilité, qui peut être mise en œuvre de manière complémentaire ou alternative aux possibilités exposées dans ce qui précède, consiste à mettre en œuvre des particules solides qui incluent des matériaux cellulosiques recyclés, issus par exemple de journaux, papiers de collecte ou résidus de bois coupé.

En définitive, des particules contenant de la matière cellulosique sont mises en œuvre, et celles-ci peuvent se présenter notamment sous la forme de poudres et/ou fibres de cellulose naturelles blanches, semi-blanches ou grises, issues par exemple du bois ou du bambou, et/ou de fibres ou poudres de cellulose issues du recyclage, et/ou de farines de bois.

De manière générale, le recours à une dispersion de particules solides formées de matière cellulosique végétale, et en particulier de fibres naturelles constituées sensiblement intégralement ou majoritairement de cellulose naturelle (biopolymère de formule brute (C₆H₁₀O₅)ₙ), permet d'obtenir d'excellents résultats, tant sur le plan de l'effet décoratif (texturation, matité, toucher) que sur le plan de la coloration et de l'impact environnemental.

De préférence, lesdites particules dispersées dans la composition présentent une taille sensiblement inférieure ou égale à 50 µm, de préférence inférieure ou égale à 40 µm, de façon en particulier à limiter le risque de bouchage ou d'encrassement des buses de pulvérisation (spray) mises en œuvre pour un dépôt par laquage.

De préférence, les particules solides se présentent sous la forme de fibres dont la longueur est comprise entre sensiblement 5 et 600 µm, avantageusement entre sensiblement 10 et 500 µm, de plus de façon encore plus préférentielle entre 20 et 400 µm.

Le recours à de telles plages préférentielles de longueur de fibres permet un excellent compromis entre les effets esthétiques recherchés (texturation, coloration, etc.) et l'applicabilité industrielle, au moyen par exemple de pulvérisateurs pneumatiques ou de dispositifs d'impression sérigraphiques.

Avantageusement, la dispersion de particules solides forme entre sensiblement 1 % et 30 % en poids de ladite composition liquide ou pâteuse. A partir de 1 % en poids de particules solides au sein de la composition liquide ou pâteuse, des effets intéressants en termes d'aspect peuvent être constatés, que ce soit en termes de texturation ou de coloration. Au-delà d'environ 30 % en poids, la composition s'avère difficile à mettre en œuvre industriellement, et notamment difficile ou quasi-impossible à pulvériser avec des moyens industriels de type pistolet pneumatique, ou à appliquer par impression, notamment par sérigraphie. Dans le cas de ce dernier mode d'application (impression par sérigraphie), on constate même parfois qu'à partir de 25 - 30 % la teneur relative en liant s'avère insuffisante pour qu'une tenue satisfaisante du revêtement sur le verre puisse être obtenue. Au-delà de 30 %, il s'avère également généralement extrêmement difficile, sinon impossible, de filtrer la composition avant application.

Avantageusement, la composition liquide ou pâteuse comprend également des pigments de coloration, distincts de ladite dispersion de particules solides. Les pigments de coloration visent à impartir une couleur prédéterminée, ainsi qu'un certain degré d'opacité, à la composition, et donc au revêtement décoratif qui en résulte. La dispersion de particules solides peut également contribuer à colorer la composition et le revêtement, de sorte que si la composition comprend des pigments de coloration, la coloration du revêtement résulte de préférence d'un effet combiné des pigments de coloration et de la dispersion de particules solides cellulosiques, éventuellement végétales.

Avantageusement, la composition comprend 2 à 20 % en poids de pigments de coloration, de préférence entre 5 et 10 % en poids.

Les pigments de coloration inclus dans la composition peuvent comprendre des pigments minéraux et/ou organiques. Ils présentent avantageusement une granulométrie (taille de particules) très fine (par exemple inférieure ou égale à 1 µm), et en tous les cas de préférence une granulométrie inférieure à la granulométrie desdites particules solides formées de matière cellulosique, éventuellement végétale. Parmi les pigments de coloration utilisables dans le cadre de l'invention, on peut par exemple citer : oxyde de titane, lithopone, oxyde de zinc, bleu outremer, ferrocyanure ferrique, bleu de cobalt, oxyde de chrome (hydraté ou non), verre de chrome, jaune vanadate/bismuth, jaune titanate chrome/antimoine, jaune titanate nickel/antimoine, oxyde de fer (FeO(OH), αFe₂O₃, Fe₂O₃, FeO.Fe₂O₃, Fe(OH)₂.Fe₂O₃, Fe₃O₄), jaune de zinc, jaune de chrome, chromate de plomb, jaune de cadmium, orangé de chrome, orangé de molybdène, oxyde de fer, rouge de molybdène, rouge de cadmium, oxyde de fer, carbonate de calcium, sulfure de zinc, talc, kaolin, gel de silice, poudre d'aluminium ou de cuivre ou de bronze, noir de carbone, mica, oxychlorure de bismuth, dérivés azoïques, phthalocyanines, oxazines. D'autres éléments contribuant à conférer un aspect spécifique au revêtement peuvent être inclus dans la composition, comme par exemple des nacres, des paillettes, des charges ou tout additif susceptible de conférer un effet esthétique particulier (par exemple : base matante pour renforcer un aspect dépoli, agent de texture, agent permettant d'obtenir des effets de reflets...).

Avantageusement, afin de favoriser l'applicabilité de la composition, notamment au pistolet pneumatique de pulvérisation ou par sérigraphie, ainsi que l'obtention d'un résultat esthétique acceptable, ladite composition comprend une teneur totale en éléments particulaires solides, incluant lesdites particules solides formées de matière cellulosique, éventuellement végétale, qui n'excède pas 60% en poids, de préférence 50% en poids, de ladite composition. Cela signifie que la teneur totale de la composition en éléments particulaires solides (incluant donc lesdites particules solides cellulosiques, éventuellement végétales, mais également d'éventuels pigments et charges, notamment minérales) n'excède pas 60% en poids de la composition totale, de façon encore plus préférentielle n'excède pas 50% en poids de la composition totale. En d'autres termes, les éléments particulaires solides (tous confondus, incluant la matière végétale ou cellulosique, ainsi que les éventuels pigments et charges) dispersés dans la composition représentent avantageusement 60 % en poids ou moins de la composition, de préférence 50 % en poids ou moins.

Ladite composition comprend ainsi des éléments particulaires solides incluant lesdites particules solides formées de matière cellulosique, ces dernières représentant avantageusement au moins 30% en poids, de préférence au moins 40% en poids, de tous les éléments particulaires solides (incluant lesdites particules solides cellulosiques, mais aussi d'éventuels pigments et charges) dispersés dans la composition.

De préférence les éventuelles charges (hors particules solides de matière cellulosique, et hors pigments éventuels) présentes au sein de la composition représentent un pourcentage en poids de ladite composition qui est inférieur au pourcentage en poids dudit revêtement représenté par lesdites particules solides de matière cellulosique, éventuellement végétale.

Ladite composition est exempte de tout halogène ou composé halogéné et, en particulier de toute substance à base de fluor ou dérivé de fluor, comme par exemple les fluorocarbones, hydrofluorocarbones, le PTFE (polytétrafluoroéthylène), etc. Ceci permet d'une part de préserver l'environnement et de faciliter le recyclage et d'autre part de permettre d'appliquer, sur le revêtement décoratif obtenu par dépôt de la composition liquide ou pâteuse sur le récipient en verre, une décoration superficielle, par exemple un lettrage déposé par sérigraphie ou tout autre motif déposé par sérigraphie ou pulvérisation par exemple. La présence d'un composé fluoré, et en particulier un composé fluoré de type PTFE, conduirait à conférer des propriétés hydrophobes au revêtement décoratif qui gêneraient ou empêcheraient le dépôt d'une couche superficielle sur le revêtement décoratif.

Avantageusement, le procédé comprend, après l'étape d'application de la composition liquide ou pâteuse, une étape de séchage pour durcir ladite couche de composition liquide ou pâteuse et obtenir ainsi ledit revêtement décoratif adhérent au récipient.

Le séchage peut être mené par tous moyens connus, en fonction de la nature notamment de la base liante. L'étape de séchage peut par exemple comprendre une opération de cuisson du récipient recouvert de la couche de composition liquide ou pâteuse dans un four ou une arche de cuisson, afin de transformer la couche fluide déposée à la surface du récipient en un revêtement mince durci adhérent et résistant. Alternativement de façon complémentaire, l'étape de séchage peut comprendre la soumission du récipient recouvert de la couche de composition liquide ou pâteuse à un flux d'air forcé, de préférence à un flux d'air forcé chauffé. L'étape de séchage permet ainsi d'évacuer la phase aqueuse ou la phase solvant et d'entraîner la transformation de la base liante en un film adhérent renfermant en particulier la dispersion de particules solides, l'ensemble formant ainsi ledit revêtement décoratif adhérent au récipient, de préférence directement à la paroi de verre nu de ce dernier. En sus de ce séchage physique par élimination du solvant (avantageusement par évaporation), l'étape de séchage peut également comprendre un séchage chimique de façon à ce qu'une fois le solvant (organique ou aqueux) évaporé, une réaction chimique puisse être déclenchée pour transformer la base liante en un film résistant mécaniquement et chimiquement. Ce séchage chimique peut consister par exemple en un séchage par oxydation, par polycondensation, par polyaddition encore par exemple par polymérisation radicalaire.

Dans un premier mode de réalisation particulier, la composition liquide ou pâteuse forme une peinture (ou laque) en phase aqueuse, ladite étape d'application comprenant une pulvérisation de ladite peinture (ou laque) sur le récipient, par exemple et de préférence au moyen d'un pistolet pneumatique. Selon ce premier mode de réalisation particulier, un vernis incolore comprenant au moins une base liante et une phase aqueuse est préparé. Parmi les liants utilisables pour préparer la base liante peuvent être cités par exemple les substances de natures suivantes: acétate de cellulose, acryliques, alkydes, butyrate de cellulose, époxydiques, éthers cellulosiques, formophénoliques, mélamine-formol (aminoplastes), nitrocellulose, polyamides, polyesters, polyester-uréthannes, polyuréthannes bicomposants, produits bitumeux, silicones, urée-formol (aminoplastes), vinyliques.

La base liante est mélangée en l'espèce à une phase aqueuse (formée par exemple par un mélange d'eau et de solvants organiques, avec par exemple entre 60 et 80 % en poids d'eau), pour obtenir un vernis transparent hydrodiluable (si le liant est en émulsion) ou hydrosoluble (si le liant est en solution). Des additifs peuvent également être ajoutés (agents épaississants, agents de coalescence, agents de neutralisation, adjuvants divers... ). A ce mélange base liante/phase aqueuse sont incorporées éventuellement des pigments de coloration, mais également la dispersion de particules solides formées de matières cellulosiques, éventuellement végétales, (par exemple des fibres naturelles constituées à 100 % de cellulose, de bois ou toute autre matière végétale, incluant éventuellement des fibres composées d'une partie recyclée contenant des journaux, papiers de collecte ou résidus de bois coupé par exemple). De manière préférentielle, ladite dispersion de particules solides forme dans ce cas entre sensiblement 2 et 20 % en poids, avantageusement entre 2 et 15 % en poids, de façon encore plus préférentielle entre 5 et 15 % en poids, de ladite composition liquide ou pâteuse. ces teneurs préférentielles s'avèrent présenter un excellent compromis applicabilité / effet esthétique, étant entendu qu'il est préférable, pour les raisons déjà évoquées dans ce qui précède, de ne pas dépasser 30 % en poids de particules solides formées de matières cellulosiques, éventuellement végétales, dans la composition liquide ou pâteuse destinée à être appliquée sur le récipient. Une fois le mélange effectué, la rhéologie (notamment la viscosité) de la composition est ajustée par apport d'un diluant (phase aqueuse) et des additifs de tension sont de préférence également ajoutés afin d'obtenir une bonne tenue mécanique mais aussi chimique sur le verre.

La composition ainsi obtenue peut être ensuite pulvérisée avec un pistolet pneumatique directement sur le verre nu du récipient, par exemple sur la surface extérieure de ce dernier. L'ajustement de la teneur en particules solides végétales / cellulosiques permet d'obtenir des effets de texture variables en fonction de la quantité incorporée, mais également de la granulométrie (taille) des particules (longueur des fibres par exemple). La teneur en particules solides végétales /cellulosiques permet également de jouer sur le coloris et le caractère transparent ou translucide. Ainsi, une composition formée du mélange d'un vernis incolore en phase aqueuse et de 5 % en poids de particules solides formées de fibres de cellulose naturelle conduit à un revêtement translucide présentant un aspect dépoli blanc, l'augmentation de la teneur en particules solides (par exemple à 10 %, puis à 15 %) conduisant à des effets de coloris et de texture différents, le revêtement prenant une teinte beige/marron et un aspect dépoli et mat beaucoup plus prononcé, ce qui est relativement inattendu.

Il est bien entendu possible, comme évoqué précédemment, d'inclure dans la formulation de la composition des pigments de coloration, pour combiner aux effets de texture et de matité obtenus grâce à la présence de la dispersion de particules solides cellulosiques, à un effet de coloration plus classique. Un exemple de formulation d'une composition de laquage noire destinée à être pulvérisée pneumatiquement sur un flacon en verre est le suivant :
- vernis incolore en phase aqueuse : 1 500 g ;
- agent destiné à favoriser un aspect dépoli : 300 g ;
- pâte noire à base de pigments de coloration : 300 g ;
- diluant (eau) : 300 g ;
- fibres de cellulose naturelle blanche (longueur de fibres : 40 µm) ;
- additifs de tension : 58 g.

La dispersion de particules solides cellulosiques, employée dans l'exemple ci-dessus est donc une dispersion de fibres constituées intégralement de cellulose.

Un autre exemple de formulation d'une laque noire est la suivante :
- vernis incolore en phase aqueuse : 130 g ;
- pigments blancs : 37 g ;
- pigments rouges : 0,9 g ;
- pigments noirs : 0,1 g ;
- pigments roses : 0,1 g ;
- fibres de bois (longueur comprise entre 20 et 40 micromètres), de couleur jaunâtre : 13 g ;
- additifs de tension : 5,43 g ;
- diluant (eau) : 19,5 g.

La dispersion de particules solides employées dans l'exemple précédent est donc une dispersion de fibres de bois, chaque fibre incluant par exemple environ 50% en poids de cellulose, 25 % en poids d'hémicellulose et 25 % en poids de lignine. La combinaison des fibres de bois de couleur jaunâtre avec les différents pigments blancs, rouges, noirs et roses permet d'obtenir une laque noire présentant un aspect esthétique remarquable, tant au niveau du coloris que de la texture et de l'effet mat obtenus. Les compositions ainsi obtenues peuvent être pulvérisées sur le récipient, au moyen d'un pistolet pneumatique équipé par exemple d'une buse de diamètre 10 mm.

Selon un deuxième mode de réalisation, la composition liquide ou pâteuse forme une encre solvantée pour sérigraphie, ladite étape d'application de la composition sur le récipient comprenant dans ce cas une application de ladite encre par sérigraphie sur le récipient.

Dans ce mode de réalisation, on utilise avantageusement :
- une encre solvantée de sérigraphie dite « *prête à l'emploi* » qui contient un vernis constitutif (mélange de résines, de solvants, etc.) formant la base liante et la phase solvant,
- des additifs,
- et une dispersion de particules solides de matière cellulosique, éventuellement végétale.

La base liante est dans ce cas formée par exemple d'une ou plusieurs résines, et par exemple d'un mélange de plusieurs résines qui peuvent être choisies parmi :
- les résines cellulosiques (par exemple résines nitrocellulosiques d'éthylcellulose, d'acétobutyrate ou d'acétoproprionate de cellulose, éventuellement associées à d'autres résines telles que les résines alkydes, polyesters, polyuréthannes, maléiques ou polyamides, etc.) ;
- résines vinyliques (par exemple : acétates de polyvinyle, polychlorures de vinyle, copolymères acétate de vinyle / chlorure de vinyle, polybutyrals vinyliques, éthers polyvinyliques, etc.) ;
- résines polyuréthannes, mono ou bi-composants ;
- résines acryliques (par exemple : copolymères à base de méthacrylate de méthyle et méthacrylate de butyle, polyacrylates modifiés par de la colophane, etc.) ;
- résines polyamides, cétoniques, maléiques, polyesters, urée-formol, etc.

De préférence, la base liante employée inclut une ou plusieurs résines époxydiques, afin de favoriser une bonne tenue de la composition directement sur le verre nu. Quant à la phase solvant, qui sert notamment à solubiliser les résines de la base liante et à régler la viscosité de l'encre, elle est présente dans une proportion qui peut être élevée et inclut par exemple une ou plusieurs des substances suivantes:
- alcools ;
- glycols ;
- éthers, notamment éthers de glycol ;
- cétones ;
- et/ou hydrocarbures pétroliers.

De préférence, la composition combine des résines époxydiques à titre de base liante et des éthers de glycol, tels que le butylglycol et/ou l'éthyldiglycol à titre de phase solvant.

La composition est ainsi avantageusement préparée en mélangeant les résines de la base liante avec les solvants de la phase solvant, et en ajoutant à ce mélange, si souhaité, des pigments de coloration. Des additifs sont également avantageusement présents dans la composition (plastifiants, dispersants, mouillants, anti-mousse, fongicides, promoteurs d'adhésion... ). Cette encre de sérigraphie prête à l'emploi met par exemple en œuvre les proportions suivantes :
- pigments : 10 % en poids ;
- résines époxydiques : 15 - 25 % en poids ;
- solvants (éthers de glycol par exemple) : 55 - 70 % en poids ;
- additifs : 5 - 10 %.

A cette encre de sérigraphie « *prête à l'emploi* » est ajoutée ladite dispersion de particules solides cellulosiques, de façon qu'elle forme par exemple entre sensiblement 10 et 40 % en poids, de préférence entre 20 et 30 % en poids de la composition liquide ou pâteuse. Le recours à de telles proportions de particules solides permet d'obtenir une encre texturée favorisant l'obtention d'effets esthétiques particulièrement attractifs, avec notamment un effet matifiant remarquable, ainsi que l'obtention d'un toucher particulier, qui s'avère particulièrement soyeux lorsque des fibres constituées intégralement de cellulose naturelle sont employées à titre de particules solides de matière cellulosique.

Ces différents effets peuvent être ajustés en jouant sur la teneur en particules solides cellulosiques, de la composition, étant entendu qu'à partir d'une certaine teneur maximale (30 %, éventuellement jusqu'à 40 %) le ratio teneur en résines / teneur en particules solides de matière cellulosique, ne permettra pas de garantir une tenue suffisante de l'encre directement sur le verre nu (risque de délitement et déségrégation de la couche de revêtement).

Enfin, une fois les particules solides mélangées à la base et aux solvants, sont ajoutés avantageusement un diluant permettant d'ajuster la rhéologie de l'encre (pour obtenir une viscosité comprise par exemple entre environ 500 et 2 000 mPa.s) ainsi que des additifs (par exemple des durcisseurs) assurant à la fois la tenue mécanique et chimique sur le verre, qu'il soit nu ou préalablement laqué par exemple.

Un exemple de formulation d'une encre de sérigraphie blanche mettant en œuvre une dispersion de particules solides formées de fibres de cellulose est la suivante :
- encre blanche de sérigraphie prête à l'emploi (incluant une base liante à base de résine époxydique et une phase solvant incluant par exemple un éther de glycol et des pigments) : 7 grammes ;
- additif durcisseur : 3 grammes ;
- fibres blanches de cellulose (longueur moyenne des fibres : 40 µm) : 3 grammes ;
- diluant pour ajuster la rhéologie : 1,3 à 1,5 gramme.

Cette formulation s'avère présenter un excellent compromis entre l'applicabilité par sérigraphie et l'aspect esthétique obtenu (encre blanche texturée d'aspect particulièrement mat et de toucher soyeux).

Bien entendu, l'invention n'est absolument pas limitée aux exemples exposés plus en détails dans ce qui précède et la nature des particules cellulosiques, employées, ainsi que leur teneur, seront adaptées en fonction des effets recherchés et des contraintes d'applicabilité.

Par ailleurs, l'invention concerne également en tant que tel un récipient en verre destiné à contenir un produit cosmétique, par exemple un parfum, susceptible d'être obtenu par le procédé décrit en détails dans ce qui précède, et de préférence directement obtenu par ce procédé.

Par conséquent, la description qui précède concernant le procédé s'applique également intégralement au récipient, dont une partie au moins est donc recouverte d'un revêtement décoratif, lequel revêtement décoratif comprend au moins un liant formant un film au sein duquel sont dispersées des particules solides en quantité suffisante pour influer sur la texture et/ou la coloration du revêtement, lesdites particules étant formées de matière cellulosique, éventuellement végétale, comme décrit en détails ci-avant.

Comme exposé précédemment en relation avec le procédé, les particules se présentent avantageusement sous la forme de fibres et/ou granules et/ou poudres, et par exemple sous la forme de fibres dont la longueur est comprise entre sensiblement 5 et 600 µm, de préférence entre sensiblement 10 et 500 µm, de façon encore plus préférentielle entre 20 et 400 microns.

Lesdites particules solides incluent par exemple des particules issues du groupe suivant
- particules de cellulose et/ou d'hémicellulose et/ou de lignine ;
- et/ou particules de bois ;
- et/ou particules de plantes ligneuses ;
- et/ou particules à base de matériaux cellulosiques recyclés.

Comme prévu dans ce qui précède en relation avec le procédé, la partie du récipient recouverte par le revêtement est une paroi de verre nu, à laquelle adhère de préférence directement le revêtement, étant entendu qu'il est également parfaitement envisageable d'insérer une couche intermédiaire entre le revêtement et la paroi de verre nu (par exemple une couche primaire ou une couche décorative).

Le revêtement inclut par exemple des pigments de coloration, qui sont distincts de la dispersion de particules solides.

Avantageusement, ladite dispersion de particules solides forme entre sensiblement 1 et 30 % en poids du revêtement.

Avantageusement, ledit revêtement comprend, dispersés dans ledit film, des éléments particulaires solides (insolubles dans la phase aqueuse ou solvant) incluant lesdites particules solides formées de matière cellulosique, ces dernières représentant au moins 30% en poids, de préférence au moins 40% en poids, de tous les éléments particulaires solides (incluant donc également les éventuels pigments et charges par exemple) dispersés dans le film.

De préférence les éventuelles charges (hors particules solides de matière cellulosique, éventuellement végétale, et hors éventuels pigments) présentes au sein du revêtement représentent un pourcentage en poids dudit revêtement qui est inférieur au pourcentage en poids dudit revêtement représenté par lesdites particules solides de matière cellulosique, éventuellement végétale.

Dans un mode de réalisation particulier, correspondant au premier mode de réalisation particulier du procédé décrit dans ce qui précède, le revêtement recouvrant le récipient est issu du séchage d'une couche de peinture (ou laque) en phase aqueuse appliquée par pulvérisation, par exemple au moyen d'un pistolet pneumatique, sur le récipient. Bien entendu, la description exposée dans ce qui précède concernant le premier mode de réalisation particulier du procédé (application d'une composition formant peinture / laque) reste entièrement valable en ce qui concerne le récipient issu d'un tel procédé.

Dans un autre mode de réalisation, correspondant au deuxième mode particulier de réalisation du procédé décrit dans ce qui précède, le revêtement est issu du séchage d'une encre solvantée appliquée par sérigraphie sur le récipient.

Avantageusement le procédé comprend, préalablement à ladite étape d'application, une étape de préchauffage dudit récipient pour l'amener à une température d'application supérieure à la température ambiante, par exemple une température comprise entre 30 et 80°C, de préférence entre 30 et 35°C, de façon que ladite couche soit appliquée pendant que ledit récipient se trouve à ladite température d'application.

Cette application sur un récipient chaud, dont la température est avantageusement supérieure à la température ambiante (établissant alors un gradient de température enter le récipient et l'atmosphère environnante), permet de faciliter l'accroche de la couche sur le verre et de favoriser un dépôt homogène, en particulier lorsque l'application est mise en œuvre par pulvérisation (laquage), et en particulier pulvérisation pneumatique (spray). Un tel préchauffage présente *a priori* un intérêt moindre pour une application sérigraphique.

L'étape de préchauffage peut être avantageusement mise en œuvre par flammage, au moyen par exemple d'un ou plusieurs dispositifs de combustion (« *flammeurs* ») générant une ou plusieurs flammes qui viennent lécher la surface du verre à recouvrir. Alternativement, il est possible de recourir à un tunnel de chauffage par rayonnement infrarouge, ou tout autre moyen de chauffage connu.

L'invention permet en définitive d'obtenir des effets de décoration sur verre remarquables, dans des conditions d'applicabilité optimales et adaptables (de multiples procédés sont envisageables, comme par exemple le laquage ou la sérigraphie), en minimisant l'impact environnemental par l'emploi de matières biosourçables et/ou issues de filières de recyclage.

## Revendications

1. - Procédé de décoration d'un récipient en verre destiné à contenir un produit cosmétique, par exemple un parfum, ledit récipient étant un flacon ou un pot, ledit procédé comprenant une étape d'application, sur une partie au moins dudit récipient, d'une couche d'une composition liquide ou pâteuse pour former un revêtement décoratif adhérant au récipient, ladite composition comprenant au moins une base liante, du genre résine, ainsi qu'une phase aqueuse ou solvant, ledit procédé étant **caractérisé en ce que** ladite composition liquide ou pâteuse comprend également une dispersion de particules solides en quantité suffisante pour influer sur la texture et/ou la coloration dudit revêtement décoratif, lesdites particules solides étant formées de matière cellulosique, et **en ce que** lorsque lesdites particules solides incluent des particules de cellulose, la cellulose constituant lesdites particules présente un degré de polymérisation supérieur à 400, de préférence supérieur à 500, de façon encore plus préférentielle supérieur à 700, ladite composition étant exempte de tout halogène ou composé halogéné, et en particulier de toute substance à base de fluor ou dérivé de fluor.

2. - Procédé selon la revendication précédente **caractérisé en ce que** lesdites particules solides incluent des particules de cellulose et/ou d'hémicellulose et/ou de lignine et/ou des particules de bois et/ou des particules de plantes ligneuses et/ou des particules à base de matériaux cellulosiques recyclés.

3. - Procédé selon l'une des revendications précédentes **caractérisé en ce que** lesdites particules solides incluent :
- des particules à base de lin, par exemple des particules d'anas et/ou des particules de fibres de lin,
- et/ou des fibres de bois,
- et/ou de la cellulose en poudre,
- et/ou des particules de chanvre,
- et/ou des particules de bambou.

4. - Procédé selon l'une des revendications précédentes **caractérisé en ce que** ladite composition liquide ou pâteuse est exempte de cellulose microcristalline.

5. - Procédé selon l'une des revendications précédentes **caractérisé en ce que** lesdites particules présentent une taille sensiblement inférieure ou égale à 50 µm, de préférence inférieure ou égale à 40 µm.

6. - Procédé selon l'une des revendications précédentes **caractérisé en ce que** ledit récipient présente une surface interne destinée à se trouver en contact avec le produit cosmétique, et une surface externe opposée, ladite partie du récipient sur laquelle est appliquée ladite couche étant uniquement formée par la surface externe, et non par la surface interne, afin de former un revêtement décoratif externe hors de contact du produit cosmétique.

7. - Procédé selon l'une des revendications précédentes **caractérisé en ce que** ladite dispersion de particules solides est distincte du liant.

8. - Procédé selon l'une des revendications précédentes **caractérisé en ce que** ladite composition comprend des pigments de coloration, distincts de ladite dispersion de particules solides.

9. - Procédé selon l'une des revendications précédentes **caractérisé en ce que** ladite composition se présente, à température ambiante, sous la forme d'un liquide.

10. -Procédé selon l'une des revendications précédentes **caractérisé en ce que** ladite composition liquide ou pâteuse forme une peinture en phase aqueuse, ladite étape d'application comprenant une pulvérisation de ladite peinture sur ledit récipient, par exemple au moyen d'un pistolet pneumatique.

11. -Procédé selon la revendication précédente **caractérisé en ce que** ladite dispersion de particules solides forme entre sensiblement 2 et 15 % en poids de ladite composition liquide ou pâteuse.

12. -Procédé selon l'une des revendications 1 à 9 **caractérisé en ce que** ladite composition liquide ou pâteuse forme une encre solvantée pour sérigraphie, ladite étape d'application comprenant une application de ladite encre par sérigraphie sur ledit récipient.

13. -Procédé selon la revendication précédente **caractérisé en ce que** ladite dispersion de particules solides forme entre sensiblement 10 et 40 % en poids, de préférence entre 20 et 30 % en poids de ladite composition liquide ou pâteuse.

14. -Procédé selon l'une des revendications précédentes **caractérisé en ce qu'**il comprend, préalablement à ladite étape d'application, une étape de préchauffage dudit récipient pour l'amener à une température d'application supérieure à la température ambiante, par exemple une température comprise entre 30 et 80°C, de façon que ladite couche soit appliquée pendant que ledit récipient se trouve à ladite température d'application.

15. - Récipient en verre destiné à contenir un produit cosmétique, par exemple un parfum, ledit récipient étant un flacon ou un pot, une partie au moins dudit récipient étant recouverte d'un revêtement décoratif obtenu par un procédé conforme à l'une des revendications précédentes.

## Patentansprüche

1. - Verfahren zum Dekorieren eines Glasbehälters, der dazu bestimmt ist, ein kosmetisches Produkt, beispielsweise ein Parfüm, zu enthalten, wobei besagter Behälter ein Flakon oder ein Tiegel ist, wobei besagtes Verfahren einen Schritt des Aufbringens einer Schicht einer flüssigen oder pastösen Zusammensetzung auf mindestens einen Teil besagten Behälters umfasst, um eine dekorative Beschichtung zu bilden, die an dem Behälter haftet, wobei die Zusammensetzung mindestens eine Bindemittelbasis des Typs Harz sowie eine wässrige Phase oder ein Lösungsmittel umfasst, wobei besagtes Verfahren **dadurch gekennzeichnet ist, dass** die flüssige oder pastöse Zusammensetzung ferner eine Dispersion fester Partikel in einer Menge enthält, die ausreicht, um die Textur und/oder die Färbung besagter dekorativen Beschichtung zu beeinflussen, wobei die festen Partikel aus Zellulosematerial gebildet sind, und dass, wenn die festen Partikel Zellulosepartikel enthalten, die die Partikel bildende Cellulose einen Polymerisationsgrad von mehr als 400, bevorzugt mehr als 500, noch bevorzugter mehr als 700 aufweist, wobei besagte Zusammensetzung frei von Halogenen oder Halogenverbindungen, insbesondere von fluorhaltigen Substanzen oder Fluorderivaten, ist.

2. - Verfahren nach dem vorhergehenden Anspruch, **dadurch gekennzeichnet, dass** die festen Partikel Partikel aus Cellulose und/oder aus Hemicellulose und/oder aus Lignin und/oder Partikel aus Holz und/oder aus holzigen Pflanzen und/oder Partikel auf der Basis von recycelten Zellulose-Materialien enthalten.

3. - Verfahren nach einem der vorhergehenden Ansprüche, **dadurch gekennzeichnet, dass** besagte feste Partikel Folgendes umfassen:
- Partikel auf Basis von Flachs, beispielsweise Partikel von Rückständen und/oder Partikel von Flachsfasern,
- und/oder Holzfasern,
- und/oder Zellulosepulver,
- und/oder Hanfpartikel,
- und/oder Bambuspartikel.

4. - Verfahren nach einem der vorhergehenden Ansprüche, **dadurch gekennzeichnet, dass** die flüssige oder pastöse Zusammensetzung frei von mikrokristalliner Cellulose ist.

5. - Verfahren nach einem der vorhergehenden Ansprüche, **dadurch gekennzeichnet, dass** die besagten Partikel eine Größe von im Wesentlichen weniger als oder gleich 50 µm aufweisen, bevorzugt weniger als oder gleich 40 µm.

6. - Verfahren nach einem der vorhergehenden Ansprüche, **dadurch gekennzeichnet, dass** besagter Behälter eine Innenfläche, die dazu bestimmt ist, mit dem kosmetischen Produkt in Kontakt zu stehen, und eine gegenüberliegende Außenfläche aufweist, wobei besagter Teil des Behälters, auf den besagte Schicht aufgetragen wird, ausschließlich durch die Außenfläche und nicht durch die Innenfläche gebildet ist, um eine externe dekorative Beschichtung zu bilden, die nicht mit dem kosmetischen Produkt in Kontakt steht.

7. - Verfahren nach einem der vorhergehenden Ansprüche, **dadurch gekennzeichnet, dass** besagte Dispersion fester Partikel von dem Bindemittel verschieden ist.

8. - Verfahren nach einem der vorhergehenden Ansprüche, **dadurch gekennzeichnet, dass** besagte Zusammensetzung Farbpigmente enthält, die von der Dispersion fester Partikel verschieden sind.

9. - Verfahren nach einem der vorhergehenden Ansprüche, **dadurch gekennzeichnet, dass** besagte Zusammensetzung bei Raumtemperatur in Form einer Flüssigkeit vorliegt.

10. - Verfahren nach einem der vorhergehenden Ansprüche, **dadurch gekennzeichnet, dass** besagte flüssige oder pastöse Zusammensetzung eine Farbe in wässriger Phase bildet, wobei besagter Schritt des Auftragens ein Aufsprühen besagter Farbe auf besagten Behälter, beispielsweise mittels einer Druckluftpistole, umfasst.

11. - Verfahren nach dem vorhergehenden Anspruch, **dadurch gekennzeichnet, dass** besagte Dispersion fester Partikel im Wesentlichen zwischen 2 und 15 Gew.-% besagter flüssiger oder pastöser Zusammensetzung ausmacht.

12. - Verfahren nach einem der Ansprüche 1 bis 9, **dadurch gekennzeichnet, dass** besagte flüssige oder pastöse Zusammensetzung eine lösungsmittelhaltige Farbe für Siebdruck bildet, wobei besagter Schritt des Aufbringens ein Aufbringen besagter Farbe durch Siebdruck auf besagten Behälter umfasst.

13. - Verfahren nach dem vorhergehenden Anspruch, **dadurch gekennzeichnet, dass** besagte Dispersion fester Partikel im Wesentlichen zwischen 10 und 40 Gew.-%, bevorzugt zwischen 20 und 30 Gew.-% besagter flüssigen oder pastösen Zusammensetzung ausmacht.

14. - Verfahren nach einem der vorhergehenden Ansprüche, **dadurch gekennzeichnet, dass** es vor dem besagten Schritt des Aufbringens einen Schritt des Vorwärmens des Behälters auf eine Anwendungstemperatur oberhalb der Umgebungstemperatur umfasst, beispielsweise auf eine Temperatur zwischen 30 und 80 °C, so dass besagte Schicht aufgetragen wird, während sich besagter Behälter auf besagter Anwendungstemperatur befindet.

15. - Glasbehälter zur Aufnahme eines kosmetischen Produkts, beispielsweise eines Parfüms, wobei besagter Behälter ein Flakon oder ein Tiegel ist und mindestens ein Teil besagten Behälters mit einer dekorativen Beschichtung bedeckt ist, die durch ein Verfahren gemäß einem der vorhergehenden Ansprüche erhalten wurde.

## Claims

1. A method for decorating a glass container intended to contain a cosmetic product, for example a perfume, said container being a bottle or a jar, said method comprising a step of applying, to at least part of said container, a layer of a liquid or pasty composition to form a decorative coating adhering to the container, said composition comprising at least one binder base, of the resin type, as well as an aqueous or solvent phase, said method being **characterized in that** said liquid or pasty composition also comprises a dispersion of solid particles in a sufficient quantity to influence the texture and/or the coloring of said decorative coating, said solid particles being formed of cellulosic material, and **in that** when said solid particles include cellulose particles, the cellulose constituting said particles has a degree of polymerization greater than 400, preferably greater than 500, even more preferably greater than 700, said composition being free of any halogen or halogenated compound, and in particular any fluorine or fluorine derivatives-based substance.

2. The method according to the preceding claim, **characterized in that** said solid particles include cellulose and/or hemicellulose and/or lignin particles and/or wood particles and/or woody plant particles and/or recycled cellulosic materials-based particles.

3. The method according to any of the preceding claims, **characterized in that** said solid particles include:
- flax-based particles, for example shives and/or flax fiber particles,
- and/or wood fibers,
- and/or powdered cellulose,
- and/or hemp particles,
- and/or bamboo particles.

4. The method according to any of the preceding claims, **characterized in that** said liquid or pasty composition is free of microcrystalline cellulose.

5. The method according to any of the preceding claims, **characterized in that** said particles have a size substantially less than or equal to 50 µm, preferably less than or equal to 40 µm.

6. The method according to any of the preceding claims, **characterized in that** said container has an inner surface intended to be in contact with the cosmetic product, and an opposite outer surface, said portion of the container to which said layer is applied being formed solely by the outer surface, and not by the inner surface, in order to form an external decorative coating out of contact with the cosmetic product.

7. The method according to any of the preceding claims, **characterized in that** said dispersion of solid particles is distinct from the binder.

8. The method according to any of the preceding claims, **characterized in that** said composition comprises coloring pigments, distinct from said dispersion of solid particles.

9. The method according to any of the preceding claims, **characterized in that** said composition is, at room temperature, in the form of a liquid.

10. The method according to any of the preceding claims, **characterized in that** said liquid or pasty composition forms a water-based paint, said application step comprising a spraying of said paint onto said container, for example using a pneumatic spray gun.

11. The method according to the preceding claim, **characterized in that** said dispersion of solid particles forms between substantially 2 and 15% by weight of said liquid or pasty composition.

12. The method according to any of claims 1 to 9, **characterized in that** said liquid or pasty composition forms a solvent-based ink for screen printing, said application step comprising applying said ink by screen printing onto said container.

13. The method according to the preceding claim, **characterized in that** said dispersion of solid particles forms between substantially 10 and 40% by weight, preferably between 20 and 30% by weight of said liquid or pasty composition.

14. The method according to any of the preceding claims, **characterized in that** it comprises, prior to said application step, a step of preheating said container to bring it to an application temperature higher than room temperature, for example a temperature comprised between 30 and 80°C, so that said layer is applied while said container is at said application temperature.

15. A glass container intended to contain a cosmetic product, for example a perfume, said container being a bottle or a jar, at least a portion of said container being covered with a decorative coating obtained by a method according to any of the preceding claims.
